# EUROPÄISCHE PATENTANMELDUNG

(11) **EP 2 015 080 A2**
(43) Veröffentlichungstag der Anmeldung: **14.01.2009**
(21) Anmeldenummer: 08103969.5
(22) Anmeldetag: 15.05.2008
(51) Int. Cl.: G01P 1/12, G01P 1/14, B41J 15/04, G01D 15/24, G01D 15/28

(54) **Fahrtschreiber mit Druckvorrichtung**

(30) Priorität: 11.06.2007 DE 102007027395; 01.02.2008 DE 102008007371
(71) Anmelder: Continental Automotive GmbH, 30165 Hannover (DE)
(72) Erfinder: Steiert, Michael, 78050 Villingen-Schwenningen (DE)

(57) **Zusammenfassung**

Die Erfindung bezieht sich auf einen Fahrtschreiber mit einem Gehäuse 1, in dem eine Druckvorrichtung und eine Aufnahmekammer für eine Rolle 13 eines mit der Druckvorrichtung bedruckbaren bandartigen Druckmaterials 14 angeordnet ist. Dabei weist die Rolle 13 einen zentrischen Rollenkern auf, der auf einer Achse 12 frei drehbar gelagert ist. Dem Druckbereich der Druckvorrichtung liegt parallel eine um eine Walzenachse von einem Drehantrieb drehbar antreibbare Transportwalze 18 gegenüber, durch die das in einer Transportebene an dem Druckbereich vorbeiführbare Druckmaterial 14 in Anlage an den Druckbereich beaufschlagbar und an dem Druckbereich vorbei förderbar ist. In der Aufnahmekammer 8 ist eine aus dem Gehäuse 1 lösbare Baueinheit 9 anordnenbar, die einen Lagerbock aufweist, an dem die die Rolle 13 des Druckmaterials 14 tragende Achse 12 angeordnet und die Transportwalze 18 drehbar gelagert ist. Dabei ist die Transportwalze 18 in der Einbaulage der Baueinheit 9 in der Aufnahmekammer 8 mit dem Drehantrieb gekuppelt.

## Beschreibung

Die Erfindung bezieht sich auf einen Fahrtschreiber mit einem Gehäuse, in dem eine Druckvorrichtung und eine Aufnahmekammer für eine Rolle eines von der Druckvorrichtung bedruckbaren bandartigen Druckmaterials angeordnet ist, wobei die Rolle einen zentrischen Rollenkern aufweist, der auf einer Achse frei drehbar gelagert ist, mit einer dem Druckbereich der Druckvorrichtung parallel gegenüberliegenden, um eine Walzenachse von einem Drehantrieb drehbar antreibbaren Transportwalze, durch die das in einer Transportebene an dem Druckbereich vorbeiführbare Druckmaterial in Anlage an den Druckbereich beaufschlagbar und an dem Druckbereich vorbeiförderbar ist.

Bei derartigen Fahrtschreibern, so genannten digitalen Tachographen, werden fahrer- und fahrzeugbezogene Daten auf ein bandartiges bedruckbares Druckmaterial gedruckt. Zum Speichern und Archivieren sind auf einer Chipkarte Speicherchips angeordnet.

Dabei ist es bekannt, das bandartige bedruckbare Druckmaterial als Rolle in eine ausschiebbare Schublade einzulegen, wobei bei eingeschobener Schublade ein kleines Endstück des Druckmaterials aus einem Ausgabeschlitz des Geräts herausschaut. Erfolgt ein Ausdruck, wandert das bedruckte Druckmaterial aus dem Ausgabeschlitz nach außen.

An der Mündung des Ausgabeschlitzes ist eine scharfe Abrisskante angeordnet, über die das bedruckte Druckmaterial gezogen und so abgetrennt wird.

Bei Verbrauch des Druckmaterials ist eine neue Rolle Druckmaterial in die Aufnahmekammer einzulegen.

Dies bedingt, dass die Transportwalze aus hochwertigem und damit teurem Material besteht, da sie eine Haltbarkeit über das gesamte Geräteleben gewährleisten muss, welche zehn Jahre betragen kann.

Aufgabe der Erfindung ist es daher, einen Fahrtschreiber der eingangs genannten Art zu schaffen, der einen kostengünstigeren Aufbau besitzt.

Diese Aufgabe wird erfindungsgemäß dadurch gelöst, dass in der Aufnahmekammer eine aus dem Gehäuse lösbare Baueinheit anordnenbar ist, die einen Lagerbock aufweist, an dem die die Rolle des Druckmaterials tragende Achse angeordnet und die Transportwalze drehbar gelagert ist, wobei die Transportwalze in der Einbaulage der Baueinheit in der Aufnahmekammer mit dem Drehantrieb gekuppelt ist.

Durch diese Ausbildung ist es möglich, die Transportwalze und damit den Fahrtschreiber einfacher und somit kostengünstiger auszubilden, da die Transportwalze nur noch eine Lebensdauer für den Verbrauch einer Rolle Druckmaterial aufweisen muss.

Bei einem Aufbrauch einer Rolle Druckmaterial wird die gesamte Baueinheit einschließlich Transportwalze aus der Aufnahmekammer entnommen und eine neue, eine volle Rolle Druckmaterial enthaltene Baueinheit eingesetzt.

Dies führt auch zu einer einfacheren und schnelleren Neubestückung mit Druckmaterial.

Die Baueinheit, deren Druckmaterial verbraucht ist, kann entweder den Druckmaterialhersteller zur Neubestückung mit Druckmaterial zurückgegeben oder recycled werden.

Vorzugsweise bestehen die Teile der Bauteile der Baueinheit aus Kunststoff.

Zu einer einfachen Entnahme und Neubestückung kann die Aufnahmekammer eine zu einer Bedienerseite des Fahrtschreibers offene oder öffnenbare Bestückungsöffnung aufweisen.

Sind die Druckvorrichtung und die Aufnahmekammer in einem schubladenartigen Träger angeordnet, der zur Bedienerseite aus einem Aufnahmeschacht des Gehäuses herausbewegbar ist, so kann die Bestückungsöffnung an der Oberseite des Trägers angeordnet und bei in Betriebsposition befindlichem Träger durch das Gehäuse geschlossen sein.

Es ist aber auch möglich, dass die Bestückungsöffnung durch einen Deckel verschließbar ist.

Dazu kann der Deckel eine um eine Schwenkachse schwenkbare Verschlussklappe sein, die damit an dem Gehäuse angeordnet ist.

Dabei erstreckt sich vorzugsweise die Schwenkachse entlang eines Randes der Bestückungsöffnung.

In einer anderen, ebenfalls vorteilhaften Ausbildung ist es möglich, dass der Deckel ein Bauteil der Baueinheit ist und somit bei einem Austausch der Baueinheit ebenfalls ausgetauscht wird.

Zur einfachen, keine separaten Befestigungsteile benötigenden Halterung kann die Baueinheit mittels einer lösbaren Rastverbindung in der Einbaulage der Baueinheit in der Aufnahmekammer arretierbar sein.

In besonders einfacher Ausbildung kann dabei die Baueinheit ein oder mehrere Rastarme aufweisen, die in der Einbaulage der Baueinheit entsprechende Rastnocken des Gehäuses hintergreifen.

Zur Zuführung des bedruckten Druckmaterials zu einer Bedienperson ist es möglich, dass das äußere freie Ende des bandartigen Druckmaterials durch einen zur Bedienerseite hin nach außen mündenden Druckmaterialschlitz hindurchführbar ist.

Dabei kann der Druckmaterialschlitz in dem Deckel ausgebildet sein, durch den die Bestückungsöffnung verschließbar ist.

Ist koaxial an der Transportwalze ein Antriebsrad angeordnet, das in der Einbaulage der Baueinheit in direktem oder indirektem Antriebseingriff mit dem Drehantrieb ist, so erfolgt zwangsweise mit dem Einsetzen einer neuen Baueinheit auch ein Kuppeln der Transportwalze mit dem Drehantrieb.

Zur Drehzahlreduzierung kann das Antriebsrad über ein Getriebe mit dem Drehantrieb in Eingriff sein, wobei das Antriebsrad ein Zahnantriebsrad und/oder das Getriebe ein Zahnradgetriebe sein kann.

Zu einer einfachen Kontaktierung durch einfaches Positionieren der Baueinheit in der Aufnahmekammer mit einer Stromquelle führt es, wenn der Drehantrieb an dem Gehäuse angeordnet und bei Positionierung der Baueinheit in der Aufnahmekammer mit dem Antriebsrad oder dem Getriebe kuppelbar ist, wobei vorzugsweise der Drehantrieb ein Elektromotor sein kann.

Der Drehantrieb kann aber auch an der Baueinheit angeordnet sein und Anschlusskontakte aufweisen, die bei Positionierung der Baueinheit in der Aufnahmekammer mit am Gehäuse angeordneten Bestromungskontakten kontaktierbar sind.

Diese Ausbildung benötigt keinen Drehantrieb, der für die ganze Lebensdauer des Fahrzeugs ausgelegt sein muss, sondern es reicht ein Billigstdrehantrieb, da seine Funktion nur für die Verbrauchszeit einer Druckmaterialrolle gewährleistet sein muss. Bei Bestückung mit einer neuen Druckmaterialrolle erfolgt automatisch auch eine Bestückung mit einem neuen Drehantrieb.

Es ist die Verwendung der verschiedensten Motorarten möglich.

Ein besonders einfach aufgebauter und kostengünstiger Drehantrieb besteht darin, dass der Drehantrieb ein Piezomotor ist.

Dabei kann der Piezomotor einen federnd an der Baueinheit angeordneten Resonator aufweisen, an dem ein piezoelektrisches Bauelement angeordnet ist und der mit einem Kontaktbereich an dem Antriebsrad in Anlage ist, wobei bei Betrieb des Piezomotors von dem Kontaktbereich des Resonators eine elliptische oder lineare Schwingung ausführbar ist.

Auch hier erfolgt durch die Positionierung der Baueinheit in der Aufnahmekammer automatisch auch die Kontaktierung des Piezomotors.

Gewichtsparend kann der Lagerbock aus zwei Seitenteilen bestehen, die über eine oder mehrere Traversen miteinander verbunden sind.

Dabei kann in Doppelfunktion die die Rolle des Druckmaterials tragende Achse eine Traverse bilden.

Ein einfacher Aufbau ergibt sich weiterhin, wenn die Transportwalze sich zwischen den beiden Seitenteilen erstreckt und mit ihren Endbereichen in Lageröffnungen der Seitenteile drehbar gelagert ist.

Ausführungsbeispiele der Erfindung sind in der Zeichnung dargestellt und werden im Folgenden näher beschrieben. Es zeigen:
- Figur 1: eine Frontansicht eines ohne Deckel dargestellten Fahrtschreibers,
- Figur 2: einen Querschnitt entlang der Linie I - I in Figur 1 eines ersten Ausführungsbeispiels eines Fahrtschreibers mit einem ersten Beispiel einer Baueinheit,
- Figur 3: einen Querschnitt entlang der Linie I - I in Figur 1 eines zweiten Ausführungsbeispiels eines Fahrtschreibers mit einem zweiten Beispiel einer Baueinheit,
- Figur 4: eine Frontansicht der zweiten Baueinheit des Ausführungsbeispiels nach Figur 3,
- Figur 5: eine Seitenansicht der zweiten Baueinheit des Ausführungsbeispiels nach Figur 4,

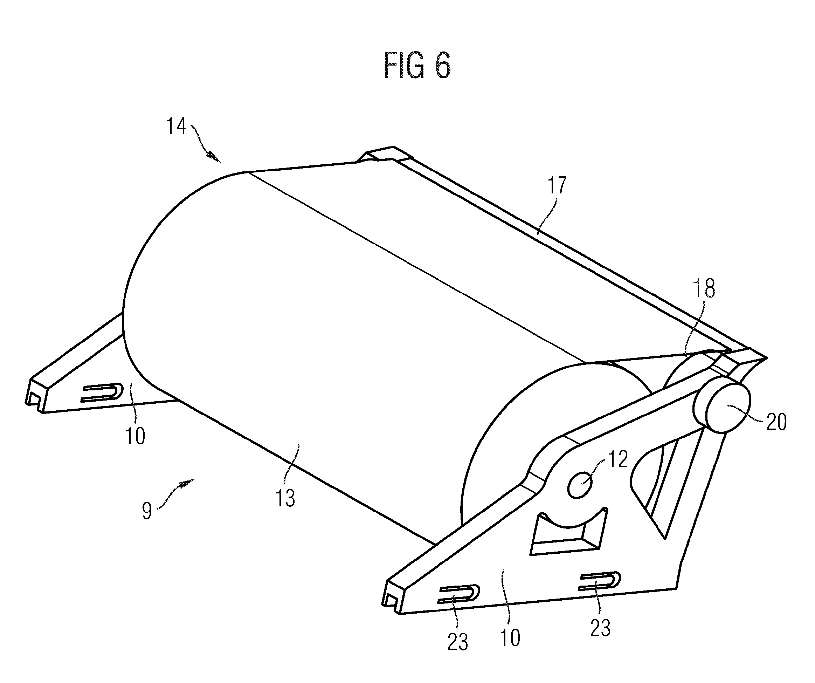

- Figur 6: eine perspektivische Ansicht der ersten Baueinheit des Ausführungsbeispiels nach Figur 2,
- Figur 7: eine perspektivische Ansicht eines dritten Ausführungsbeispiels einer Baueinheit.

Der in den Figuren dargestellte Fahrtschreiber weist ein Gehäuse 1 mit einem rechteckigen Querschnitt im DIN-Radioformat auf.

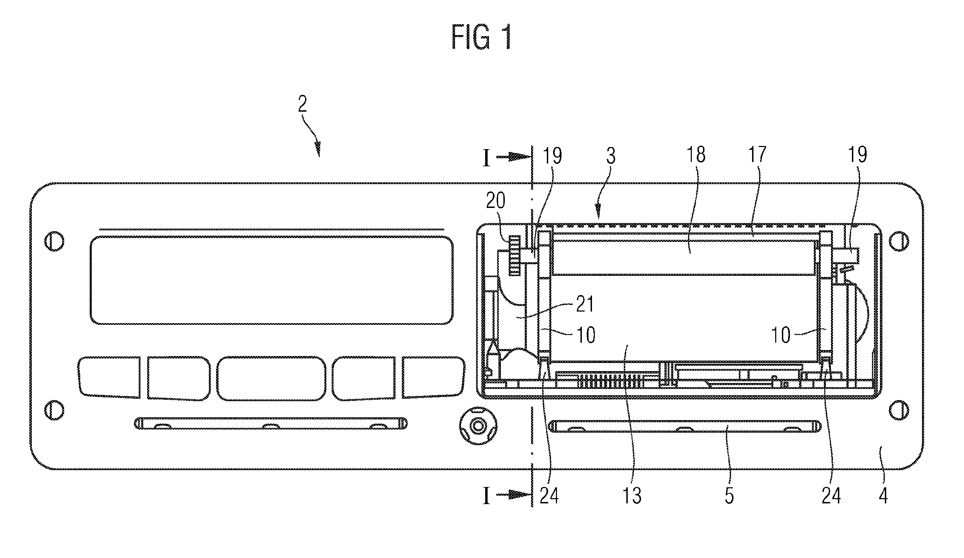

Wie Figur 1 zeigt, ist das Gehäuse 1 in einem entsprechenden Schacht in der Armaturentafel 2 eines Kraftfahrzeugs eingesetzt und an seiner zur Bedienerseite gerichteten Bestückungsöffnung 3 von einem Blendenrahmen 4 abgedeckt.

Unter der Unterseite der Bestückungsöffnung 3 ist in dem Blendenrahmen 4 ein Einführschlitz 5 ausgebildet, in den eine Chipkarte einführbar ist, die Speicherchips zum Speichern von Daten wie Fahrer-, Fahrzeug-, Fahrt- und Arbeitszeitdaten enthält.

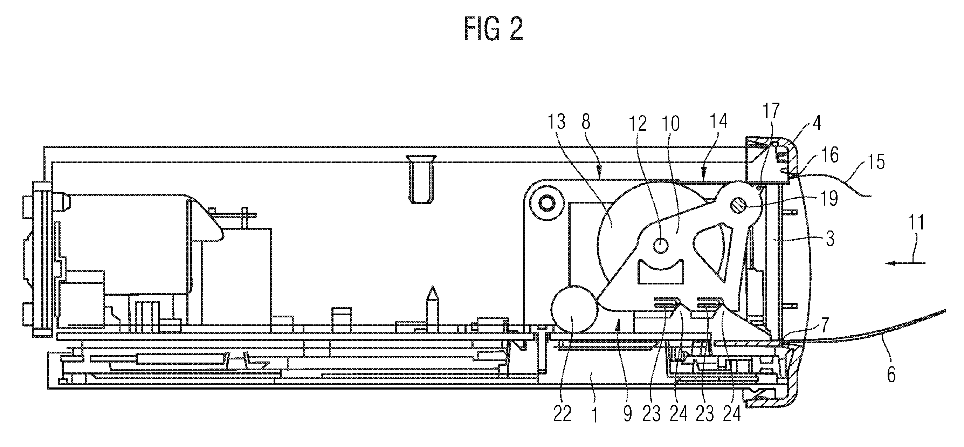

Die Bestückungsöffnung 3 ist von einem Deckel 6 bzw. 6' verschließbar, der bei dem Ausführungsbeispiel der Figur 2 um eine sich entlang des unteren Randbereichs der Bestückungsöffnung 3 horizontal erstreckenden Klappenachse 7 schwenkbar gelagert ist.

In dem Gehäuse 1 ist eine Aufnahmekammer 8 ausgebildet, die über die Bestückungsöffnung 3 zur Bedienerseite nach außen mündet.

In die Aufnahmekammer 8 ist eine Baueinheit 9, 9' von der Bedienerseite her geführt eingeschoben und in ihrer Betriebsposition arretiert.

Die Baueinheit 9, 9' besitzt zwei im Abstand zueinander angeordnete plattenartige Seitenteile 10, die über eine quer zur Einschubrichtung 11 der Baueinheit 9, 9' in die Aufnahmekammer 8 sich erstreckende Achse 12 miteinander verbunden sind.

Auf der Achse 12 ist der Rollenkern einer Rolle 13 eines bedruckbaren bandartigen Druckmaterials 14 frei drehbar gelagert.

Das äußere freie Ende 15 des bandartigen Druckmaterials 14 ist durch einen Druckmaterialschlitz 16, 16' zur Bedienerseite nach außen geführt.

Bei dem Ausführungsbeispiel der Figur 2 ist der Druckmaterialschlitz 16 zwischen dem der Klappenachse 7 gegenüberliegenden freien Rand des Deckels 6 und dem entsprechend Rand der Bestückungsöffnung 3 gebildet.

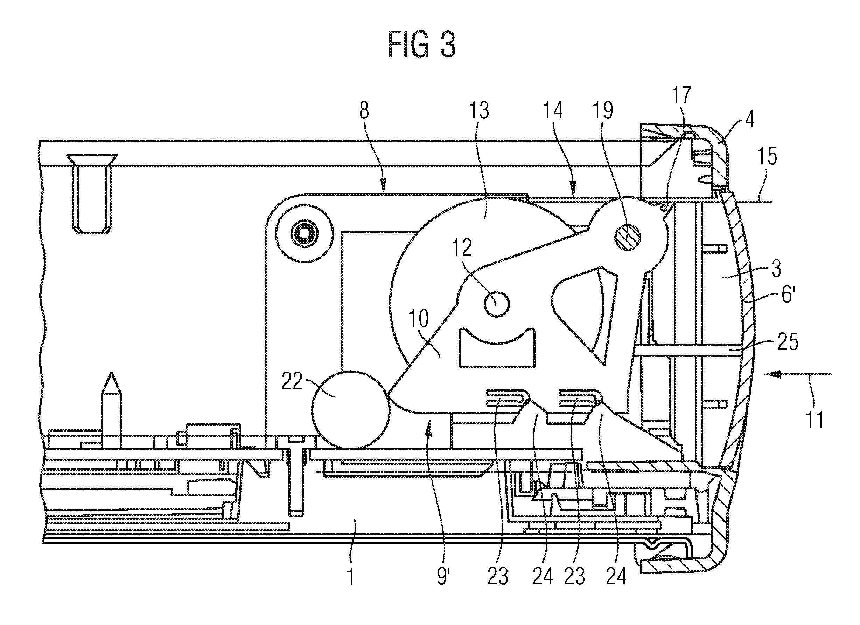

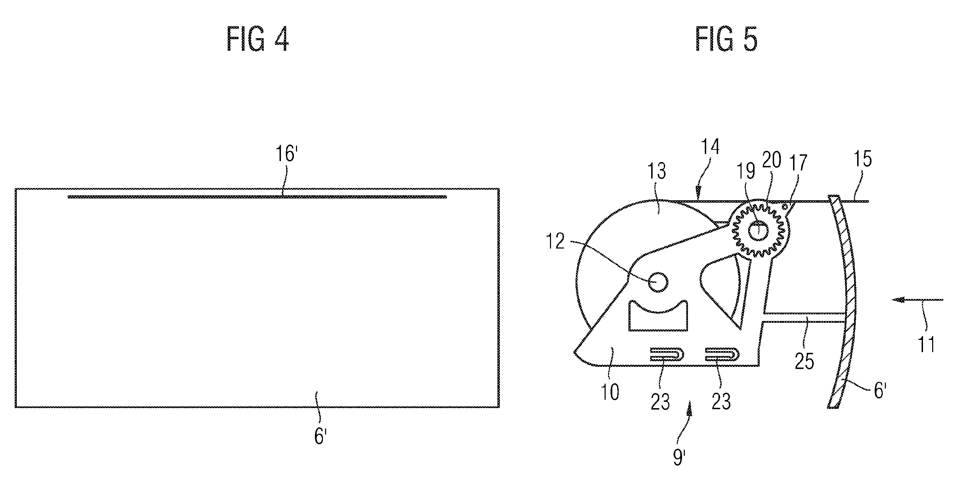

Bei dem Ausführungsbeispiel der Figuren 3 bis 5 ist der Druckmaterialschlitz 16' im oberen Endbereich des Deckels 6' ausgebildet.

Von der Rolle 13 aus ist dabei das Ende 15 des Druckmaterials 14 über eine zwischen den Seitenteilen 10 angeordnete Stützleiste 17 geführt, die Teil der Baueinheit 9, 9' ist und sich etwa auf gleicher Höhe wie der Druckmaterialschlitz 16, 16' befindet.

Parallel zur Achse 12 ist zwischen den Seitenteilen 10 eine Transportwalze 18 angeordnet und mit Achszapfen 19 an ihren Endbereichen in Lageröffnungen der Seitenteile 10 drehbar gelagert.

Das freie Ende 15 des Druckmaterials 14 ist von der Rolle 13 aus über die Transportwalze 18 und die Stützleiste 17 durch den Druckmaterialschlitz 16, 16' nach außen geführt.

Von der Transportwalze 18 wird das Druckmaterial 14 in Anlage an einer nicht dargestellten Thermodruckleiste einer Druckvorrichtung gehalten, die in dem Gehäuse 1 sich quer zur Einschubrichtung 11 erstreckend angeordnet ist und durch die das Druckmaterial 14 bedruckbar ist.

Die Transportwalze 18 ist drehbar antreibbar und dadurch das Druckmaterial 14 entgegen der Einschubrichtung 11 zur Bedienerseite hin förderbar.

Zum Antrieb der Transportwalze 18 trägt das freie Ende des linken Transportzapfens 19 der Transportwalze 18 ein Zahnantriebsrad 20.

Bei in ihre Betriebsposition eingeführter Baueinheit 9, 9' gelangt das Zahnantriebsrad 20 in Eingriff in ein nicht dargestelltes Zahnrad eines Getriebes, das in einem Getriebekasten 21 angeordnet ist, der sich fest im Gehäuse 1 befindet.

Von einem ebenfalls im Gehäuse 1 angeordneten Elektromotor 22 ist über das Getriebe und das in das Getriebe eingekuppelte Zahnantriebsrad 20 die Transportwalze 18 drehbar antreibbar.

Wird eine neue Baueinheit 9, 9' mit einer vollen Rolle 13 Druckmaterial 14 in die Aufnahmekammer 8 von der Bedienerseite her in Einschubrichtung 11 eingeführt, so werden sich entgegen der Einschubrichtung 11 freiragend erstreckende Rastarme 23 der Seitenteile 10 an gehäusefesten Rastnocken 24 federnd ausgelenkt, um nach Erreichen der Betriebsposition die Rastnocken 24 hintergreifend wieder zurückzufedern.

Dadurch ist die Baueinheit 9, 9' in ihrer Betriebsposition arretiert.

Da die Rastnocken 24 sowohl in als auch entgegen der Einschubrichtung 11 rampenartig ansteigen, kann durch Ziehen der Baueinheit 9, 9' entgegen der Einführrichtung 11 diese Arretierung auch wieder aufgehoben und die Baueinheit 9, 9' aus der Aufnahmekammer 8 entnommen werden.

Bei dem Ausführungsbeispiel der Figuren 3 bis 5 ist der Deckel 6' über ein sich entgegen der Einschubrichtung 11 erstreckendes Trägerteil 25 einteilig mit der Baueinheit 9' ausgebildet, so dass mit dem Herausziehen der Baueinheit 9' gleichzeitig die Bestückungsöffnung 3 geöffnet wird.

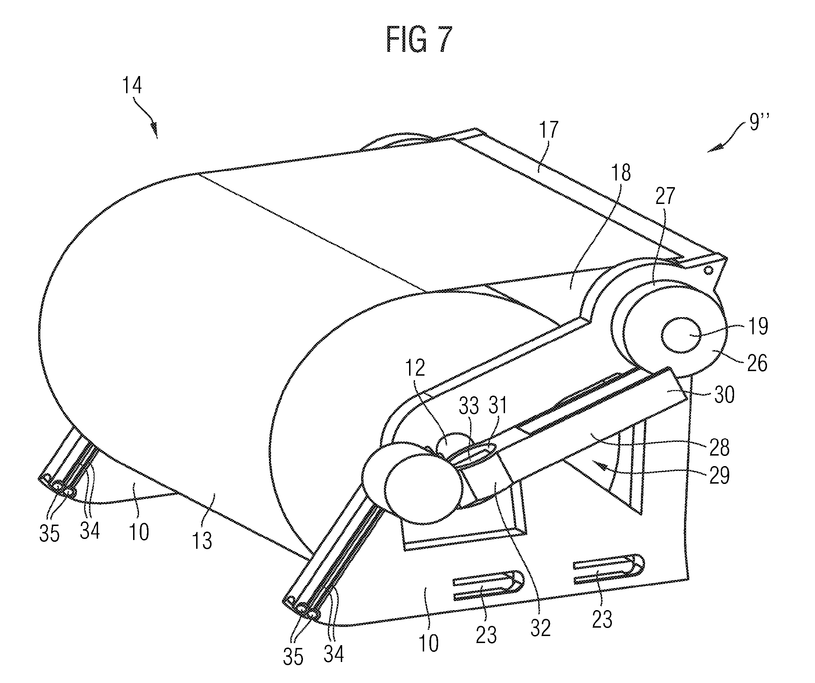

Die in Figur 7 dargestellte Baueinheit 9" ist wie die Baueinheiten 9 und 9' in die Aufnahmekammer 8 von der Bedienerseite her geführt eingeschoben und in ihrer Betriebsposition arretiert.

Die Baueinheit 9" ist bis auf den Antrieb wie die Baueinheit 9 aufgebaut und besitzt ebenfalls zwei im Abstand zueinander angeordnete plattenartige Seitenteile 10, die über eine quer zur Einschubrichtung 11 der Baueinheit 9" in die Aufnahmekammer 8 sich erstreckende Achse 12 miteinander verbunden sind.

Auf der Achse 12 ist der Rollenkern einer Rolle 13 eines bedruckbaren bandartigen Druckmaterials 14 frei drehbar gelagert.

Das äußere freie Ende 15 des bandartigen Druckmaterials 14 wird durch einen Druckmaterialschlitz zur Bedienerseite nach außen geführt.

Anstatt eines Rollenantriebs ist an dem Achszapfen 19 der Transportwalze 18 ein Antriebsrad 26 angeordnet, dessen radial umlaufende Mantelfläche 27 eine Rauheit aufweisen kann.

An der Manteloberfläche 27 ist ein stabartiger Resonator 28 eines Piezomotors 29 mit seinem einen Ende 30 mit Reibkontakt in Anlage, wobei die Längserstreckung des Resonators 28 nicht die Drehachse des Antriebsrades 26 schneidet.

Die Reibpartner von Mantelfläche 27 und Ende 30 des Resonators 28 müssen derart aufeinander abgestimmt sein, dass eine Bewegung des Antriebsrades 26 generiert werden kann.

Nahe seines dem Ende 30 entgegengesetzten zweiten Endes 32 besitzt der Resonator 28 eine durchgehende Öffnung 31, in der ein piezoelektrisches Bauelement 33 eingesetzt ist.

Mit seinem zweiten Ende 32 ist der Resonator 28 so federnd mit dem einen Seitenteil 10 verbunden, dass er mit seinem ersten Ende 30 in Anlage an dem Antriebsrad 26 ist.

Von dem Piezomotor 29 führen an dem Seitenteil 10 elektrische Leitungen 34 zu einem Randbereich des Seitenteils 10 und enden dort an Anschlusskontakten 35.

Bei in die Aufnahmekammer 8 eingesetzter Baueinheit 9" liegen die Anschlusskontakte 35 an nicht dargestellten Bestromungskontakten des Gehäuses 1 an, über die eine Beaufschlagung des Piezomotors 29 mit einem Erregersignal erfolgen kann.

Bei einer Beaufschlagung des Piezomotors 29 mit dem Erregersignal wird der Resonator 28 durch das piezoelektrische Bauelement 33 derart angeregt, dass sein einen Kontaktbereich aufweisendes Ende 30 eine elliptische Schwingung ausführt. Dadurch wird über das erste Ende 30 das Antriebsrad 26 in eine rotatorische Bewegung versetzt und das Druckmaterial durch einen Druckmaterialschlitz gefördert.

## Patentansprüche

1. Fahrtschreiber mit einem Gehäuse, in dem eine Druckvorrichtung und eine Aufnahmekammer für eine Rolle eines von der Druckvorrichtung bedruckbaren bandartigen Druckmaterials angeordnet ist, wobei die Rolle einen zentrischen Rollenkern aufweist, der auf einer Achse frei drehbar gelagert ist, mit einer dem Druckbereich der Druckvorrichtung parallel gegenüberliegenden, um eine Walzenachse von einem Drehantrieb drehbar antreibbaren Transportwalze, durch die das in einer Transportebene an dem Druckbereich vorbeiführbare Druckmaterial in Anlage an den Druckbereich beaufschlagbar und an dem Druckbereich vorbeiförderbar ist, **dadurch gekennzeichnet, dass** in der Aufnahmekammer (8) eine aus dem Gehäuse (1) lösbare Baueinheit (9, 9', 9") anordnenbar ist, die einen Lagerbock aufweist, an dem die die Rolle (13) des Druckmaterials (14) tragende Achse (12) angeordnet und die Transportwalze (18) drehbar gelagert ist, wobei die Transportwalze (18) in der Einbaulage der Baueinheit (9, 9', 9") in der Aufnahmekammer (8) mit dem Drehantrieb gekuppelt ist.

2. Fahrtschreiber nach Anspruch 1, **dadurch gekennzeichnet, dass** die Aufnahmekammer (8) eine zu einer Bedienerseite des Fahrtschreibers offene oder öffnenbare Bestückungsöffnung (3) aufweist.

3. Fahrtschreiber nach Anspruch 2, **dadurch gekennzeichnet, dass** die Druckvorrichtung und die Aufnahmekammer in einem schubladenartigen Träger angeordnet sind, der zur Bedienerseite aus einem Aufnahmeschacht des Gehäuses herausbewegbar ist.

4. Fahrtschreiber nach Anspruch 2, **dadurch gekennzeichnet, dass** die Bestückungsöffnung (3) durch einen Deckel (6, 6') verschließbar ist.

5. Fahrtschreiber nach Anspruch 4, **dadurch gekennzeichnet, dass** der Deckel (6) eine um eine Schwenkachse (7) schwenkbare Verschlussklappe ist.

6. Fahrtschreiber nach Anspruch 5, **dadurch gekennzeichnet, dass** sich die Schwenkachse (7) entlang eines Randes der Bestückungsöffnung (3) erstreckt.

7. Fahrtschreiber nach Anspruch 4, **dadurch gekennzeichnet, dass** der Deckel (6') ein Bauteil der Baueinheit (9') ist.

8. Fahrtschreiber nach einem der vorhergehenden Ansprüche, **dadurch gekennzeichnet, dass** die Baueinheit (9, 9', 9'') mittels einer lösbaren Rastverbindung in der Einbaulage der Baueinheit (9, 9', 9") in der Aufnahmekammer (8) arretierbar ist.

9. Fahrtschreiber nach Anspruch 8, **dadurch gekennzeichnet, dass** die Baueinheit (9, 9', 9") ein oder mehrere Rastarme (23) aufweist, die in der Einbaulage der Baueinheit (9, 9', 9") entsprechende Rastnocken (24) des Gehäuses (1) hintergreifen.

10. Fahrtschreiber nach einem der vorhergehenden Ansprüche, **dadurch gekennzeichnet, dass** das äußere freie Ende (15) des bandartigen Druckmaterials (14) durch einen zur Bedienerseite nach außen mündenden Druckmaterialschlitz (16, 16') hindurchführbar ist.

11. Fahrtschreiber nach Anspruch 10, **dadurch gekennzeichnet, dass** der Druckmaterialschlitz (16') in dem Deckel (6') ausgebildet ist, durch den die Bestückungsöffnung (3) verschließbar ist.

12. Fahrtschreiber nach einem der vorhergehenden Ansprüche, **dadurch gekennzeichnet , dass** koaxial an der Transportwalze (18) ein Antriebsrad (26) angeordnet ist, das in der Einbaulage der Baueinheit (9, 9', 9") in direktem oder indirektem Antriebseingriff mit dem Drehantrieb ist.

13. Fahrtschreiber nach Anspruch 12, **dadurch gekennzeichnet, dass** das Antriebsrad über ein Getriebe mit dem Drehantrieb in Eingriff ist.

14. Fahrtschreiber nach einem der Ansprüche 12 oder 13, **dadurch gekennzeichnet , dass** das Antriebsrad ein Zahnantriebsrad (20) und/oder das Getriebe ein Zahnradgetriebe ist.

15. Fahrtschreiber nach einem der Ansprüche 12 bis 14, **dadurch gekennzeichnet, dass** der Drehantrieb an dem Gehäuse (1) angeordnet und bei Positionierung der Baueinheit (9, 9') in der Aufnahmekammer (8) mit dem Antriebsrad oder dem Getriebe kuppelbar ist.

16. Fahrtschreiber nach einem der vorhergehenden Ansprüche, **dadurch gekennzeichnet, dass** der Drehantrieb ein Elektromotor (22) ist.

17. Fahrtschreiber nach Anspruch 12, **dadurch gekennzeichnet, dass** der Drehantrieb an der Baueinheit (9") angeordnet ist und Anschlusskontakte (35) aufweist, die bei Positionierung der Baueinheit (9") in der Aufnahmekammer (8) mit am Gehäuse (1) angeordneten Bestromungskontakten kontaktierbar sind.

18. Fahrtschreiber nach Anspruch 17, **dadurch gekennzeichnet, dass** der Drehantrieb ein Piezomotor (29) ist.

19. Fahrtschreiber nach Anspruch 18, **dadurch gekennzeichnet, dass** der Piezomotor (29) einen federnd an der Baueinheit (9") angeordneten Resonator (28) aufweist, an dem ein piezoelektrisches Bauelement (33) angeordnet ist und der mit einem Kontaktbereich an dem Antriebsrad (26) in Anlage ist, wobei bei Betrieb des Piezomotors (29) von dem Kontaktbereich des Resonators (28) eine elliptische oder lineare Schwingung ausführbar ist.

20. Fahrtschreiber nach einem der vorhergehenden Ansprüche, **dadurch gekennzeichnet, dass** der Lagerbock aus zwei Seitenteilen (10) besteht, die über eine oder mehrere Traversen miteinander verbunden sind.

21. Fahrtschreiber nach Anspruch 20, **dadurch gekennzeichnet, dass** die die Rolle (13) des Druckmaterials (14) tragende Achse (12) eine Traverse bildet.

22. Fahrtschreiber nach einem der Ansprüche 20 oder 21, **dadurch gekennzeichnet, dass** die Transportwalze (18) sich zwischen den beiden Seitenteilen (10) erstreckt und mit ihren Endbereichen in Lageröffnungen der Seitenteile (10) drehbar gelagert ist.
